# EUROPÄISCHE PATENTSCHRIFT

(11) **EP 2 990 245 B1**
(45) Veröffentlichungstag und Bekanntmachung des Hinweises auf die Patenterteilung: **12.02.2020**
(21) Anmeldenummer: 14182542.2
(22) Anmeldetag: 27.08.2014
(51) Int. Cl.: B60J 5/04, B60J 5/06

(54) **Kraftfahrzeug mit selbstständiger Regenschutz-Vorrichtung**
Motor vehicle with automatically deploying rain protection device
Véhicule automobile doté d'un dispositif autonome de protection contre la pluie

(43) Veröffentlichungstag der Anmeldung: 02.03.2016
(73) Patentinhaber: REMIS Gesellschaft für Entwicklung und Vertrieb von technischen Elementen mbH Köln, 50829 Köln (DE)
(72) Erfinder: Dreßler, Wolfgang, 50739 Köln (DE); Hajredinaj, Semsi, 40227 Düsseldorf (DE)
(74) Vertreter: Patentanwälte ter Smitten Eberlein-Van Hoof Rütten Partnerschaftsgesellschaft mbB

(56) Entgegenhaltungen:
- WO-A1-2014/081081
- DE-A1- 4 422 321
- US-A- 1 704 994
- US-A1- 2007 241 586

## Beschreibung

Die Erfindung betrifft ein Fahrzeug mit einer selbstständigen Regenschutz-Vorrichtung für eine Türöffnung des Fahrzeuges, wobei die Regenschutz-Vorrichtung eine Trägereinrichtung aufweist, an der eine Regenschutz-Klappenleiste bewegbar gelagert ist, wobei die Regenschutz-Klappenleiste bei geschlossener Fahrzeugtür in eine Schließposition eingeklappt und bei geöffneter Fahrzeugtür in eine Offenposition ausgeklappt ist, so dass die Regenschutz-Klappenleiste ein Regenschutz-Vordach bildet.

Während eines Regens tritt beim Öffnen einer Fahrzeugtür häufig das Problem auf, dass von einem Fahrzeugdach ablaufendes oder abregnendes Regenwasser in das Fahrzeuginnere gelangt. Je nach Windrichtung, Regenintensität und Dauer der geöffneten Fahrzeugtür können das Fahrzeuginnere und auch ein darin befindlicher Passagier durch das Regenwasser nass werden.

Aus der DE 44 22 321 A1 ist ein Regenschutzdach für Fahrzeuge bekannt, das an einer Außenseite einer Fahrzeugtür angeordnet ist und beim Öffnen der Fahrzeugtür automatisch nach außen bzw. nach oben aufklappt. Dadurch kann bereits während des Öffnens der Fahrzeugtür ein Regenschutz bereitgestellt werden. Nachteilig hierbei ist jedoch, dass das Regenschutzdach im eingeklappten Zustand von außen an der Fahrzeugtür angeordnet ist, so dass das Regenschutzdach einen Teil der äußeren Fahrzeugform bildet und entsprechend an jeden Fahrzeugtyp und dessen Karosserie, insbesondere an die Fahrzeugtür, das Fahrzeugfenster und die Fahrzeugaußenfarbe angepasst werden muss. Darüber hinaus muss zum Ausklappen des Regenschutzdachs beim Öffnen der Fahrzeugtür ein erhöhter Kraftaufwand betrieben werden, um das Gewicht des vor der Fahrzeugtür befindlichen Regenschutzdachs zum Ausklappen zu überwinden. Erst nach dem Ausklappen des Regenschutzdachs lässt sich die Fahrzeugtür vollständig öffnen. Hierbei ist ein weiterer Nachteil darin zu sehen, dass neben der Fahrzeugtür auch das Regenschutzdach sich bei einem Unfall verziehen kann und die Fahrzeugtür dadurch blockiert oder nicht zugänglich sein kann.

Aus der DE 199 18 454 A1 ist ein Regenschutz bekannt, der als eine aufrollbare Folie ausgebildet ist und beim Öffnen der Fahrzeugtür zwischen der Fahrzeugtür und einem Fahrzeugrahmen aufgespannt wird. Ein solcher Regenschutz ist für Schwenktüren geeignet, nicht jedoch für Schiebetüren.

Der Erfindung liegt daher die Aufgabe zugrunde, ein Kraftfahrzeug mit einer Regenschutz-Vorrichtung bereitzustellen, mit der die im Stand der Technik genannten Nachteile überwunden werden können, und die insbesondere einen effektiven Regenschutz bei einem möglichst geringen Eingriff in die Fahrzeugkarosserie ermöglicht.

Die Lösung der Aufgabe erfolgt erfindungsgemäß durch ein Fahrzeug mit den Merkmalen des Anspruchs 1.

Erfindungsgemäß ist die Trägereinrichtung der Regenschutz-Vorrichtung fahrzeuginnenraumseitig, insbesondere benachbart zu einer Innenseite der Fahrzeugtür, an dem Fahrzeug bzw. einem Fahrzeugrahmen befestigt. Dadurch kann die Regenschutz-Vorrichtung, unabhängig von der Fahrzeugkarosserie als ein selbstständiges Bauteil, das heißt als ein unabhängig vom Fahrzeug hergestelltes, separates Modul, in das Fahrzeug nachträglich montiert werden. Die Regenschutz-Vorrichtung ist insbesondere zur Befestigung an einem Türrahmen einer Seitentüröffnung eines Wohnmobils vorgesehen.

Die Trägereinrichtung kann zumindest ein langgestrecktes Trägerelement aufweisen, das mittels Schrauben und/oder einer Verspannung mit dem Fahrzeugtürrahmen an dem Fahrzeug festgelegt ist, insbesondere an einem oberhalb einer Türöffnung angeordneten, horizontal verlaufenden Fahrzeugtürrahmen. Dazu kann eine flächig ausgebildete Unterseite der Trägereinrichtung mit der Oberflächenkontur des Fahrzeugtürrahmens korrespondieren, so dass die Trägereinrichtung mit der Unterseite flächig an dem Fahrzeugtürrahmen anliegen kann. Unter dem Begriff Türrahmen bzw. Fahrzeugtürrahmen ist zumindest ein Teil eines die Türöffnung umgebenen, fahrzeugseitigen Türholms zu verstehen. Es ist vorgesehen, dass die gesamte Regenschutz-Vorrichtung bei geschlossener Fahrzeugtür im Fahrzeuginnenraum, insbesondere im Bereich eines oberen Türholms, angeordnet sein kann, so dass an der Außenseite des Fahrzeugs keinerlei Eingriff zur Befestigung der Regenschutz-Vorrichtung in die Fahrzeugkarosserie notwendig ist.

Die Regenschutz-Klappenleiste ist bevorzugt als ein über zumindest die Breite der Türöffnung langgestrecktes, flaches, insbesondere biegesteifes Element ausgebildet. Die Regenschutz-Klappenleiste erstreckt sich in Längsrichtung parallel zu einem im Wesentlichen in Fahrzeuglängsrichtung horizontal verlaufenden Fahrzeugtürrahmen. Um in der Schließposition ein dichtes Anliegen der Regenschutz-Klappenleiste an zumindest einem Teil des Fahrzeugtürrahmens bewirken zu können, weist die Regenschutz-Klappenleiste bevorzugt eine mit zumindest einem Teil der Türöffnung, insbesondere mit einem oberen Bereich der Türöffnung, korrespondierende Form auf, das heißt die Regenschutz-Klappenleiste ist entsprechend der Rundungen der Fahrzeugtüröffnung zumindest an den Ecken entsprechend abgerundet. Die Regenschutz-Klappenleiste ist in der Schließposition bevorzugt mit einer flächig ausgebildeten Oberseite im Wesentlichen vertikal und in der Offenposition nahezu horizontal angeordnet. Insbesondere kann sich die Regenschutz-Klappenleiste im ausgeklappten Zustand bzw. in der Offenposition in einem Winkel von etwa 80° zur Vertikalen befinden, so dass die Regenschutzleiste in Richtung vom Fahrzeug weg nach unten hin abfallend ist. Dadurch kann ein auf die Regenschutz-Klappenleiste auftreffendes Regenwasser optimal abgeführt werden. Der Winkel der Regenschutz-Klappenleiste ist zumindest für den vollständig ausgeklappten Zustand, der Offenposition, einstellbar. Die Regenschutz-Vorrichtung ist vorzugsweise derart angeordnet, dass die Regenschutz-Klappenleiste bereits beginnt, ausgeklappt zu werden, sobald die Fahrzeugtür aus der Verriegelung gelöst wird. Besonders bevorzugt ist die Regenschutz-Klappenleiste derart an der Trägereinrichtung gelagert ist, dass die Regenschutz-Klappenleiste beim Öffnen der Fahrzeugtür automatisch in die Offenposition ausgeklappt und beim Schließen der Fahrzeugtür automatisch in die Schließposition eingeklappt wird. Dadurch ist eine besonders einfache Bedienung der Regenschutz-Vorrichtung ermöglicht.

Vorzugsweise ist die Regenschutz-Klappenleiste in der Schließposition zwischen der Fahrzeugtür und dem Fahrzeuginnenraum angeordnet. Dadurch kann die Regenschutz-Klappenleiste in der Schließposition in einem weder die Türschließung noch den Fahrzeugaufbau oder die Fahrzeuginnenausstattung störenden bzw. beeinflussenden Bereich angeordnet sein. Die Regenschutz-Klappenleiste kann bei geschlossener Fahrzeugtür an der Innenseite der Fahrzeugtür anliegen.

Die bewegbare Lagerung der Regenschutz-Klappenleiste an der Trägereinrichtung erfolgt bevorzugt über zumindest ein Gelenk. Dadurch ist die Regenschutz-Klappenleiste gegenüber der Trägereinrichtung schwenkbar und kann in besonders einfacher Weise aus der Schließposition in die Offenposition und umgekehrt verschwenkt werden. Durch das Gelenk kann die Regenschutz-Klappenleiste beim Ein- und Ausklappen gegenüber der Trägereinrichtung besonders exakt geführt sein. Das Gelenk kann als ein Scharnier jeglicher Art ausgebildet sein, beispielsweise als ein Klappscharnier oder Filmscharnier. Alternativ kann die Regenschutz-Klappenleiste über flexible Bänder an der Trägereinrichtung gelagert sein.

Um beim Öffnen und Schließen der Fahrzeugtür einen direkten Kontakt mit der Regenschutz-Klappenleiste zu verhindern, kann die Trägereinrichtung und/oder die Regenschutz-Klappenleiste eine feststehende oder bewegbare Rampe bzw. Steg aufweisen, wobei die Fahrzeugtür beim Öffnen und Schließen mit einem Gleitbock bzw. einer Gleitschiene an der Rampe entlang gleitet. Alternativ ist die Rampe an der Fahrzeugtür und die Gleitschiene an der Trägereinrichtung und/oder Regenschutz-Klappenleiste angeordnet. Dadurch kann die Regenschutz-Klappenleiste beim Schließen der Fahrzeugtür vor der schließenden Fahrzeugtür zurückweichen. Beim Öffnen der Fahrzeugtür kann die Regenschutz-Klappenleiste bereits beginnen auszuklappen, sobald die Fahrzeugtür aus der Verrieglung gelöst wird. Dadurch kann ein besonders effektiver Regenschutz bewirkt werden. Die Rampe ist bevorzugt aus einem abriebfesten Material hergestellt oder weist eine abriebfeste Oberfläche auf.

In einer Ausgestaltung der Erfindung ist die Regenschutz-Klappenleiste über zumindest eine Federeinrichtung mit der Trägereinrichtung verbunden, wobei die Regenschutz-Klappenleiste über die Federeinrichtung in Richtung der Offenposition vorgespannt ist. Dadurch kann die Regenschutz-Klappenleiste beim Öffnen der Fahrzeugtür ohne großen Kraftaufwand ausgeklappt werden.

Die Federeinrichtung kann als eine Torsionsfeder, Schenkelfeder oder Gasdruckfeder ausgebildet sein. Insbesondere kann die Federeinrichtung zwischen der Regenschutz-Klappenleiste und der Trägereinrichtung angeordnet sein, wobei ein erster Federarm an der Regenschutz-Klappenleiste und ein zweiter Federarm an der Trägereinrichtung befestigt ist. Alternativ kann die Federeinrichtung in die Trägereinrichtung integriert sein und zumindest einen Teil der Trägereinrichtung bilden. Beispielsweise ist ein erstes Ende bzw. ein erster Federarm der Torsions- oder Schenkelfeder an dem Fahrzeug und ein zweites freies Ende bzw. ein zweiter Federarm an der Regenschutz-Klappenleiste befestigt. Dadurch kann die Regenschutz-Vorrichtung relativ platzsparend aufgebaut sein.

Die Regenschutz-Klappenleiste ist bevorzugt als ein Formteil ausgebildet, insbesondere als ein tiefgezogenes Formteil. Dadurch kann die Regenschutz-Klappenleiste in relativ kostengünstiger Weise hergestellt werden.

Vorzugsweise weist die Regenschutz-Klappenleiste an einer flächig ausgebildeten Oberseite zumindest eine Leitflanke und/oder Rille zum Leiten des Regenwassers auf. Dadurch kann das Regenwasser an der Oberseite der Regenschutz-Klappenleiste besonders gut zu einem Seitenbereich hin abgeleitet werden, ohne dass das Regenwasser in dem Bereich der Türöffnung von der Regenschutz-Klappenleiste abtropft. An einer Kante der Regenschutz-Klappenleiste kann zudem eine Abtropfkante ausgebildet sein.

Zur Vermeidung von anhaftendem Wasser ist die Regenschutz-Klappenleiste bevorzugt aus einem hydrophoben Material hergestellt und/oder weist eine hydrophobe Oberfläche auf. Dadurch kann das Regenwaser an der Regenschutz-Klappenleiste abperlen und relativ rasch abfließen, so dass insbesondere beim Schließen der Fahrzeugtür kein Regenwasser an der Regenschutz-Klappenleiste anhaftet.

Die Trägereinrichtung weist bevorzugt zumindest zwei Trägerelemente auf, wobei ein erstes Trägerelement, an dem die Regenschutz-Klappenleiste gelagert ist, sich zu einem im Wesentlichen in Fahrzeuglängsrichtung, insbesondere horizontal verlaufenden Fahrzeugtürrahmenholm parallel erstreckt, und ein zweites Trägerelement sich zu einem im Wesentlichen vertikal verlaufenden Fahrzeugtürrahmenholm parallel erstreckt. An dem zweiten Trägerelement kann die Federeinrichtung angeordnet sein. Dadurch kann die Regenschutz-Vorrichtung relativ stabil und platzsparend aufgebaut sein.

In einer Ausgestaltung ist die Trägereinrichtung an einem Trägersystem für eine Insektenschutztür befestigt und/oder in ein Trägersystem einer Insektenschutztür integriert. Insbesondere weist die Trägereinrichtung in dieser Ausgestaltung ein Trägerelement auf, das an einem oberen Türholm angeordnet ist und als Träger einer vor die Türöffnung verschiebbaren Insektenschutztür dient. Die Insektenschutztür kann eine an sich bekannte Insektenschutztür bzw. ein Insektenschutzrollo sein, wie beispielsweise die in der DE 20 2010 011 878 U1 ausführlich beschriebene Insektenschutztür.

Besonders bevorzugt weist die Trägereinrichtung zumindest eine Führungsschiene auf, in der die Insektenschutztür entlang des Trägerelementes verschiebbar gelagert ist. Die Führungsschiene kann jede beliebige Führungseinrichtung zur Führung oder Lagerung der Insektenschutztür sein, insbesondere kann die Führungsschiene eine Nut zur seitlichen Führung oder eine Aufhängevorrichtung sein, in der die Insektenschutztür verschiebbar gelagert ist.

Vorzugsweise weist die Trägereinrichtung oder die Regenschutz-Klappenleiste einen Ablaufkanal auf, durch den Regenwasser von der Regenschutz-Klappenleiste durch den Ablaufkanal nach unten hin oder zumindest seitlich weg vom Fahrzeug ablaufen kann. Dadurch kann das an der Oberseite der Regenschutz-Klappenleiste in den Seitenbereich geleitete Regenwasser in eine Öffnung des Ablaufkanals geleitet werden und in einem Seitenbereich der Türöffnung gezielt, das heißt ohne in den Fahrzeuginnenraum zu gelangen, nach unten, zumindest unterhalb der Türöffnung, abgeleitet werden.

Es sollte deutlich sein, dass die Regenschutz-Vorrichtung vollständig separat von einem Fahrzeug hergestellt wird und ein entsprechendes Fahrzeug mit der Regenschutz-Vorrichtung nachgerüstet werden kann.

Nachfolgend wird die Erfindung anhand drei bevorzugter Ausführungsformen unter Bezugnahme auf die anliegenden Zeichnungen näher erläutert.
Figur 1 zeigt schematisch eine Seitenansicht eines Fahrzeugs mit einer erfindungsgemäßen Regenschutz-Vorrichtung an einer Seitenschiebetür,
Figuren 2a und 2b zeigen jeweils schematisch eine erste Ausgestaltung der erfindungsgemäßen Regenschutz-Vorrichtung bei geschlossener bzw. geöffneter Seitenschiebetür in einem Ausschnitt einer Schnittansicht,
Figuren 3a und 3b zeigen jeweils schematisch eine zweite Ausgestaltung der erfindungsgemäßen Regenschutz-Vorrichtung bei geschlossener bzw. geöffneter Seitenschiebetür in einem Ausschnitt einer Schnittansicht, und
Figuren 4a und 4b zeigen jeweils schematisch eine dritte Ausgestaltung der erfindungsgemäßen Regenschutz-Vorrichtung bei geschlossener bzw. geöffneter Seitenschiebetür in einem Ausschnitt einer Schnittansicht.

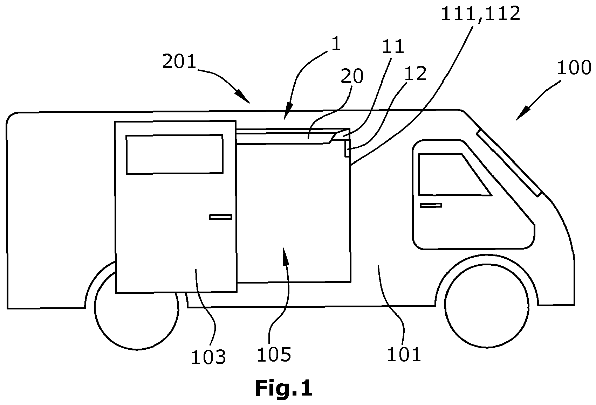

Das in der Figur 1 gezeigte Fahrzeug 100, insbesondere ein Wohnmobil, weist an einem Seitenrahmen 101 einen Fahrzeugtürrahmen 111, 112 auf, der eine Aussparung bzw. eine Türöffnung 105 umgibt. Die Türöffnung 105 ist mittels einer Fahrzeugtür 103, vorliegend eine Seitenschiebetür, verschließbar. In der Figur 1 ist die Fahrzeugtür 103 im geöffneten Zustand gezeigt. Oberhalb der Türöffnung 105 ist eine erfindungsgemäße Regenschutz-Vorrichtung 1 an dem Fahrzeugtürrahmen 111, 112 befestigt.

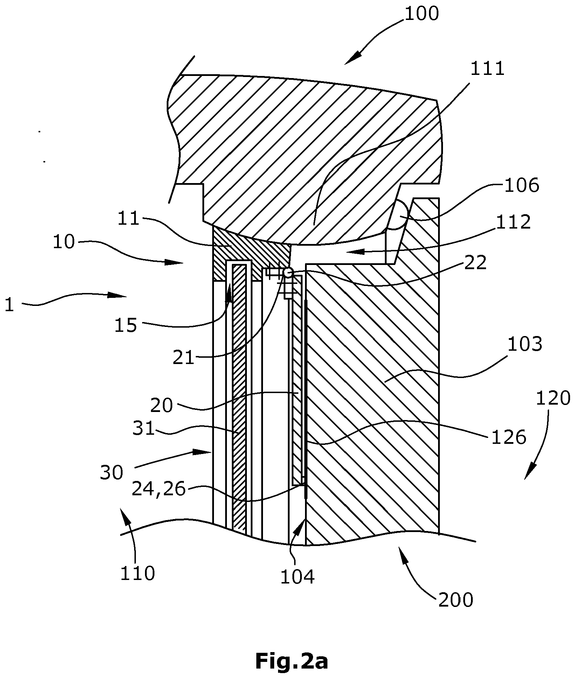

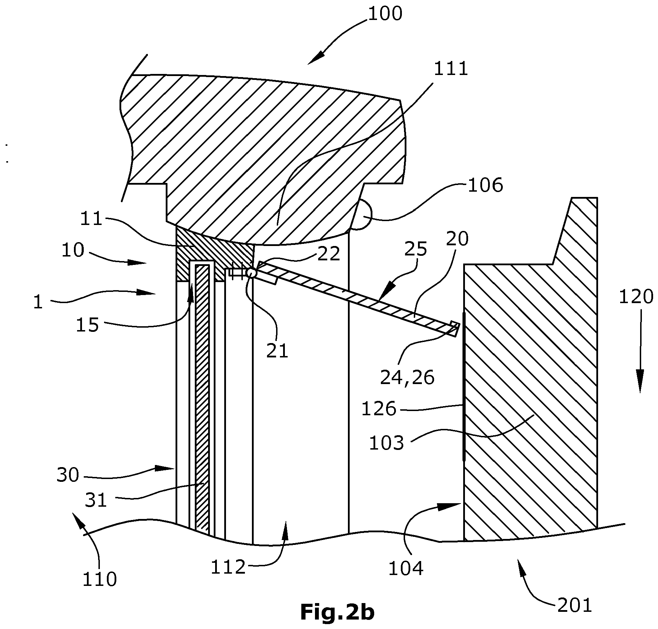

In den Figuren 2a und 2b ist jeweils eine erste Ausgestaltung der Regenschutz-Vorrichtung 1 dargestellt, wobei in der Figur 2a die Fahrzeugtür 103 im geschlossenen Zustand und in der Figur 2b im geöffneten Zustand gezeigt ist. Hierbei ist mit 111 der obere Fahrzeugtürrahmen des Fahrzeugs 100 gekennzeichnet. Die Fahrzeugtür 103 liegt im geschlossenen Zustand an einer fahrzeugseitigen Dichtung 106 an. Die Dichtung 106 ist an dem Fahrzeugtürrahmen 111, 112 vollständig umlaufend angeordnet und grenzt bekanntlich den Fahrzeuginnenraum 110 gegenüber einer äußeren Fahrzeugumgebung 120 ab. Die Dichtung 106 wird vorliegend zur Definition der Grenze des Fahrzeuginnenraums 110 gegenüber der Fahrzeugumgebung 120 angesehen. An dem Fahrzeugtürrahmen 111 ist fahrzeuginnenraumseitig die Regenschutz-Vorrichtung 1 befestigt.

Die Regenschutz-Vorrichtung 1 weist eine Trägereinrichtung 10 und eine daran bewegbar angeordnete Regenschutz-Klappenleiste 20 auf.

Die Trägereinrichtung 10 weist ein erstes Trägerelement 11 auf, das an dem oberen, horizontalen Fahrzeugtürrahmen 111 befestigt ist. Dazu weist das erste Trägerelement 11 an einer Unterseite eine zu dem oberen Fahrzeugtürrahmen 111 korrespondierende Kontur auf. An einem seitlichen, insbesondere vertikalen Fahrzeugtürrahmen 112 ist ein zweites Trägerelement 12 angeordnet, dass sich parallel zu dem Fahrzeugtürrahmen 112 erstreckt und ebenfalls eine Kontaktfläche mit einer zu dem seitlichen Fahrzeugtürrahmen 112 korrespondierenden Kontur aufweist. Das zweite Trägerelement 12 dient vorliegend insbesondere der Stabilität der Regenschutz-Vorrichtung 1.

Das erste Trägerelement 11 weist an einer der Unterseite gegenüberliegenden Oberseite eine Führungsschiene 15 zur Führung einer Insektenschutztür 31 auf, die ebenfalls geschnitten dargestellt ist. Die Führungsschiene 15 ist als eine sich über die Länge der Trägereinrichtung 10 erstreckende Nut ausgebildet, in der die Insektenschutztür 31 verschiebbar gelagert ist. Dadurch kann die Trägereinrichtung 10 als ein Trägersystem 30 für sowohl die Regenschutz-Klappenleiste 20 als auch die Insektenschutztür 31 dienen. Zur Steigerung der Stabilität weist die Trägereinrichtung 10 mehrere Trägerelemente 11, 12 auf, insbesondere ist die Trägereinrichtung 10 in dieser Ausgestaltung an dem Fahrzeugtürrahmen 105 vollständig umlaufend ausgebildet.

Die Regenschutz-Klappenleiste 20 ist vorliegend als eine flächig ausgebildete, sich in Fahrzeuglängsrichtung erstreckende Platte ausgebildet. Die Regenschutz-Klappenleiste 20 ist derart flach ausgebildet, dass die Regenschutz-Klappenleiste 20 in der Schließposition 200 zwischen der Führungsschiene 15 der Insektenschutztür 31 und der Innenseite 104 bzw. Innenverkleidung der Fahrzeugtür 103 angeordnet ist. An einer Oberfläche 25 der Regenschutz-Klappenleiste 20 ist ein hydrophobes Material ausgebildet, so dass Regenwasser an der Oberfläche 25 abperlen kann. Die geometrische Form der Regenschutz-Klappenleiste 20 ist insbesondere derart ausgebildet, dass an der Oberseite 25 auftretendes Wasser entweder in Richtung der Fahrzeugfront zum vertikalen Türrahmen 112, der sogenannten B-Säule, oder in Richtung des Fahrzeughecks zum vertikalen Türrahmen 112, der sogenannten C-Säule, abgeleitet wird. An einer Längskante der Oberseite 25 der Regenschutz-Klappenleiste 20 ist eine Leitflanke 24 angeordnet. Die Leitflanke 24 verhindert, dass Regenwasser von der Oberseite 25 der Regenschutz-Klappenleiste 20 an der Längskante herunter tropft. Die Leitflanke 24 dient vorliegend auch als ein Steg 26, der beim Öffnen und Schließen der Fahrzeugtür 103 an einer Gleitschiene 126 entlang gleiten kann. Dadurch kann die Regenschutz-Klappenleiste 20 in relativ einfacher Weise durch die Bewegung bzw. Führung der Fahrzeugtür 103 in die Offenposition 201 bzw. Schließposition 200 bewegt werden.

Die relative Bewegbarkeit der Regenschutz-Klappenleiste 20 gegenüber der Trägereinrichtung 10 erfolgt durch ein zwischen der Regenschutz-Klappenleiste 20 und der Trägereinrichtung 10 angeordnetes Gelenk 21. Mittels des Gelenks 21 kann die Regenschutz-Klappenleiste 20 zumindest in eine Offenposition 201 oder eine Schließposition 200 verschwenkt werden. Insbesondere wird die Regenschutz-Klappenleiste 20 bei geöffneter Fahrzeugtür 103, wie in Figur 2a gezeigt, in die Offenposition 201, und bei geschlossener Fahrzeugtür 103, wie in Figur 2b gezeigt, in die Schließposition 200 bewegt.

Das Gelenk 21 ist derart aufgebaut, dass ein erster Schenkelarm an der Trägereinrichtung 10 und ein zweiter Schenkelarm an der Regenschutz-Klappenleiste 20 befestigt, insbesondere angeschraubt ist. Im Drehpunkt des Gelenks 21 ist eine Federeinrichtung, insbesondere eine Schenkelfeder 22 angeordnet, die die beiden Schenkel voneinander weg bzw. die Regenschutz-Klappenleiste 20 von der Trägereinrichtung 10 weg vorspannt. Dadurch ist die Regenschutz-Klappenleiste 20 in Richtung der Offenposition 201 vorgespannt. Die Federkraft ist in allen Ausgestaltungen derart bemessen, dass die Regenschutz-Klappenleiste 20 beim Öffnen der Fahrzeugtür 103 auch bei einem auftreffenden Starkregen automatisch nach oben ausklappt. Durch die Anordnung des Gelenks 21 mit integrierter Schenkelfeder 22 ist diese Ausgestaltung der Regenschutz-Vorrichtung 1 besonders platzsparend.

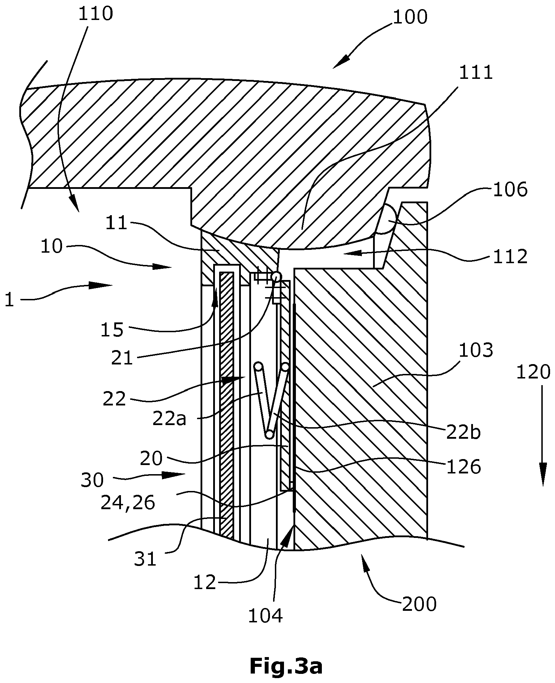

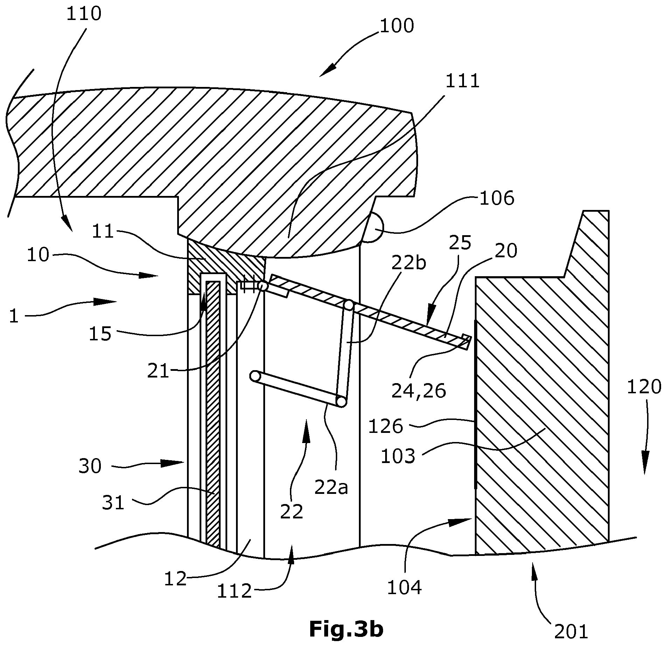

In den Figuren 3a und 3b ist jeweils eine zweite Ausgestaltung der Regenschutz-Vorrichtung 1 dargestellt, wobei wiederum in der Figur 3a die Fahrzeugtür 103 im geschlossenen Zustand und in der Figur 3b im geöffneten Zustand gezeigt ist. Dementsprechend befindet sich in der Figur 3a die Regenschutz-Klappenleiste 20 in der Schließposition 200 und in der Figur 3b in der Offenposition 201. Die Ausgestaltung des Fahrzeugs 100 sowie der Regenschutz-Vorrichtung 1 entspricht - bis auf die Ausgestaltung des Gelenks 21 und der Federeinrichtung 22 - derjenigen Ausführung, die auch in den Figuren 2a und 2b gezeigt ist.

Das Gelenk 21 ist in der in den Figuren 3a und 3b gezeigten Ausgestaltung als ein einfaches Scharniergelenk ausgebildet, dessen Schenkelarme frei drehbar sind.

An dem im Wesentlichen vertikal angeordneten Trägerelement 12 der Trägereinrichtung 10 ist eine separate Federeinrichtung 22 angeordnet, die vorliegend als eine Schenkelfeder ausgebildet ist. Die Schenkelfeder 22 weist einen ersten Federarm 22a, der an dem Trägerelement 12 drehbar gelagert ist, und einen zweiten Federarm 22b, der an der Regenschutz-Klappenleiste 20 drehbar gelagert ist. Zwischen dem ersten Federarm 22a und dem zweiten Federarm 22b ist eine Schenkelfeder angeordnet, die die beiden Federarme 22a, 22b voneinander weg vorspannt. Durch den angeordneten Mechanismus der gegeneinander vorgespannten Federarme 22a, 22b ist die Regenschutz-Klappenleiste 20 in Richtung der Offenposition 201 vorgespannt.

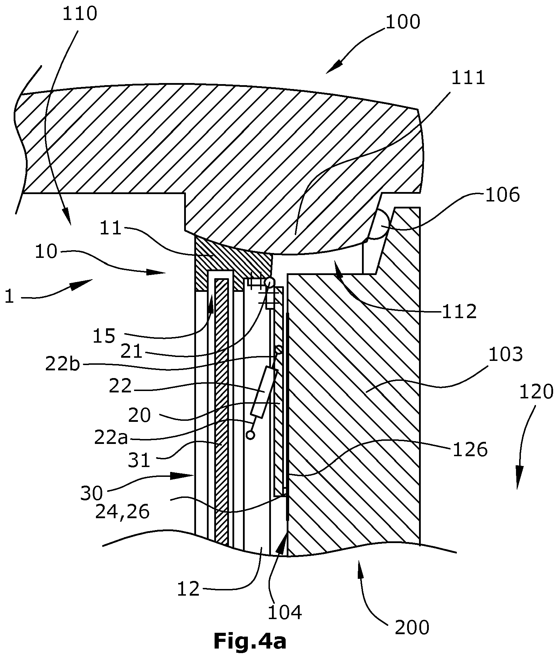

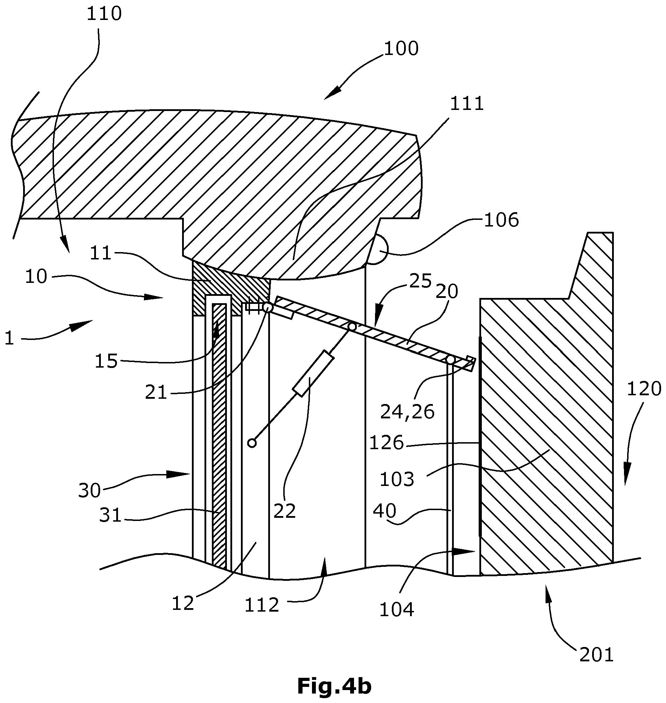

In den Figuren 4a und 4b ist jeweils eine dritte Ausgestaltung der Regenschutz-Vorrichtung 1 dargestellt, wobei in der Figur 4a die Fahrzeugtür 103 im geschlossenen Zustand bzw. die Regenschutz-Klappenleiste 20 in der Schließposition 200 und in der Figur 4b die Fahrzeugtür 103 im geöffneten Zustand bzw. die Regenschutz-Klappenleiste 20 in der Offenposition 201 gezeigt ist. Die Ausgestaltung des Fahrzeugs 100 sowie der Regenschutz-Vorrichtung 1 entspricht - bis auf die Ausgestaltung des Gelenks 21 und der Federeinrichtung 22 - derjenigen Ausführung, die auch in den Figuren 2a und 2b gezeigt ist.

Das Gelenk 21 ist in der in den Figuren 4a und 4b gezeigten Ausgestaltung als ein einfaches Scharniergelenk ausgebildet, dessen Schenkelarme frei drehbar sind.

Eine separate Federeinrichtung 22 ist an dem im Wesentlichen vertikal angeordneten Trägerelement 12 der Trägereinrichtung 10 angeordnet, wobei die Federeinrichtung 22 vorliegend als eine Gasdruckfeder ausgebildet ist. Die Gasdruckfeder 22 umfasst einen ersten Gasdruckfederarm 22a, der an dem Trägerelement 12 drehbar gelagert ist, und einen zweiten Gasdruckfederarm 22b, der an der Regenschutz-Klappenleiste 20 drehbar gelagert ist. Zwischen dem ersten Gasdruckfederarm 22a und dem zweiten Gasdruckfederarm 22b ist die Gasdruckfeder angeordnet, die die beiden Gasdruckfederarme 22a, 22b translatorisch voneinander weg vorspannt. Dadurch ist die Regenschutz-Klappenleiste 20 in Richtung der Offenposition 201 vorgespannt.

In der Figur 4b ist an der Regenschutz-Klappenleiste 20 ein Ablaufkanal 40 angeordnet, durch den Regenwasser von der Regenschutz-Klappenleiste 20 durch den Ablaufkanal 40 nach unten hin ablaufen kann. Der Ablaufkanal 40 ist vorliegend als ein Schlauch ausgebildet, der in einem Seitenbereich im Bereich der Leitflanke 24 an der Regenschutz-Klappenleiste 20 befestigt ist.

### Bezugszeichen:

- 1: Regenschutz-Vorrichtung

- 10: Trägereinrichtung
- 11: erstes Trägerelement
- 12: zweites Trägerelement
- 15: Führungsschiene

- 20: Regenschutz-Klappenleiste
- 21: Gelenk
- 22: Federeinrichtung
- 22a: erster Federarm
- 22b: zweiter Federarm
- 24: Abtropfkante
- 25: Oberfläche bzw. Oberseite der Regenschutz-Klappenleiste
- 26: Rampe, Steg

- 30: Trägersystem
- 31: Insektenschutztür

- 40: Ablaufkanal

- 100: Fahrzeug
- 101: Fahrzeugseitenrahmen
- 103: Fahrzeugtür
- 104: Fahrzeugtür-Innenseite
- 105: Fahrzeugtüröffnung
- 106: Dichtung
- 110: Fahrzeuginnenraum
- 111: Fahrzeugtürrahmen, Fahrzeugtürrahmenholm
- 112: Fahrzeugtürrahmen, Fahrzeugtürrahmenholm
- 120: Fahrzeugumgebung
- 126: Gleitbock, Gleitschiene

- 200: Schließposition
- 201: Offenposition

## Patentansprüche

1. Kraftfahrzeug (100) mit einer selbstständigen Regenschutz-Vorrichtung (1) für eine Türöffnung (105) des Fahrzeuges (100), wobei die Regenschutz-Vorrichtung (1) eine Trägereinrichtung (10) aufweist, an der eine Regenschutz-Klappenleiste (20) bewegbar gelagert ist, wobei die Regenschutz-Klappenleiste (20) bei geschlossener Fahrzeugtür (103) in eine Schließposition (200) eingeklappt und bei geöffneter Fahrzeugtür (103) in eine Offenposition (201) ausgeklappt ist, so dass die Regenschutz-Klappenleiste (20) ein Regenschutz-Vordach bildet, **dadurch gekennzeichnet, dass** die Trägereinrichtung (10) fahrzeuginnenraumseitig an dem Fahrzeug (100) befestigt ist.

2. Kraftfahrzeug (100) nach Anspruch 1, **dadurch gekennzeichnet, dass** die Regenschutz-Klappenleiste (20) in der Schließposition (200) zwischen der Fahrzeugtür (103) und dem Fahrzeuginnenraum (110) angeordnet ist.

3. Kraftfahrzeug (100) nach einem der Ansprüche 1 oder 2, **dadurch gekennzeichnet, dass** die Regenschutz-Klappenleiste (20) über zumindest ein Gelenk (21) an der Trägereinrichtung (10) gelagert ist.

4. Kraftfahrzeug (100) nach einem der voranstehenden Ansprüche, **dadurch gekennzeichnet, dass** die Regenschutz-Klappenleiste (20) und/oder die Trägereinheit (10) eine Rampe (26) aufweist, an der die Fahrzeugtür (103) beim Öffnen und Schließen mit einem Gleitbock (126) derart entlang gleitet, dass die Regenschutz-Klappenleiste (20) beim Öffnen der Fahrzeugtür (103) in die Offenposition (201) ausgeklappt und beim Schließen der Fahrzeugtür (103) in die Schließposition (200) eingeklappt wird.

5. Kraftfahrzeug (100) nach einem der voranstehenden Ansprüche, **dadurch gekennzeichnet, dass** die Regenschutz-Klappenleiste (20) über zumindest eine Federeinrichtung (22) mit der Trägereinrichtung (10) verbunden ist, wobei die Regenschutz-Klappenleiste (20) über die Federeinrichtung (22) in Richtung der Offenposition (201) vorgespannt ist.

6. Kraftfahrzeug (100) nach Anspruch 5, **dadurch gekennzeichnet, dass** die Federeinrichtung (22) als eine Torsionsfeder, Schenkelfeder oder Gasdruckfeder ausgebildet ist.

7. Kraftfahrzeug (100) nach einem der voranstehenden Ansprüche, **dadurch gekennzeichnet, dass** die Regenschutz-Klappenleiste (20) als ein tiefgezogenes Formteil ausgebildet ist.

8. Kraftfahrzeug (100) nach einem der voranstehenden Ansprüche, **dadurch gekennzeichnet, dass** die Regenschutz-Klappenleiste (20) eine flächig ausgebildete Oberseite (25) aufweist, an der zumindest eine Leitflanke und/oder Rille (24) zum Leiten des Regenwassers angeordnet ist.

9. Kraftfahrzeug (100) nach einem der voranstehenden Ansprüche, **dadurch gekennzeichnet, dass** die Regenschutz-Klappenleiste (20) aus einem hydrophoben Material besteht und/oder eine hydrophobe Oberfläche aufweist.

10. Kraftfahrzeug (100) nach einem der voranstehenden Ansprüche, **dadurch gekennzeichnet, dass** die Trägereinrichtung (10) zumindest zwei Trägerelemente (11, 12) aufweist, wobei ein erstes Trägerelement (11), an dem die Regenschutz-Klappenleiste (20) gelagert ist, sich zu einem im Wesentlichen in Fahrzeuglängsrichtung verlaufenden Fahrzeugtürrahmenholm (111) parallel erstreckt und ein zweites Trägerelement (12) sich zu einem im Wesentlichen vertikal verlaufendem Fahrzeugtürrahmenholm (112) parallel erstreckt.

11. Kraftfahrzeug (100) nach einem der voranstehenden Ansprüche, **dadurch gekennzeichnet, dass** die Trägereinrichtung (10) an einem Trägersystem (30) für eine Insektenschutztür (31) befestigbar ist und/oder in ein Trägersystem (30) einer Insektenschutztür (31) integriert ist.

12. Kraftfahrzeug (100) nach einem der voranstehenden Ansprüche, **dadurch gekennzeichnet, dass** die Trägereinrichtung (10) zumindest eine Führungsschiene (15) aufweist, in der eine Insektenschutztür (31) gelagert ist.

13. Kraftfahrzeug (100) nach einem der voranstehenden Ansprüche, **dadurch gekennzeichnet, dass** die Trägereinrichtung (10) oder die Regenschutz-Klappenleiste (20) einen Ablaufkanal (40) aufweist, durch den Regenwasser von der Regenschutz-Klappenleiste (20) abgeleitet werden kann.

14. Regenschutz-Vorrichtung (1) für eine Türöffnung (105) eines Fahrzeuges (100), wobei die Regenschutz-Vorrichtung (1) eine Trägereinrichtung (10) aufweist, an der eine Regenschutz-Klappenleiste (20) bewegbar gelagert ist, wobei im eingebauten Zustand der Regenschutz-Vorrichtung (1) die Regenschutz-Klappenleiste (20) bei geschlossener Fahrzeugtür (103) in eine Schließposition (200) eingeklappt und bei geöffneter Fahrzeugtür (103) in eine Offenposition (201) ausgeklappt ist, so dass die Regenschutz-Klappenleiste (20) ein Regenschutz-Vordach bildet, **dadurch gekennzeichnet, dass** die Trägereinrichtung (10) derart ausgebildet ist, um im eingebauten Zustand der Regenschutz-Vorrichtung (1) fahrzeuginnenraumseitig an dem Fahrzeug (100) befestigt zu sein.

## Claims

1. Motor vehicle (100) having an automatic rain protection device (1) for a door opening (105) of the vehicle (100), wherein the rain protection device (1) comprises a support device (10) on which a rain protection flap strip (20) is stored so as to be movable, wherein the rain protection flap strip (20) is folded into a closed position (200) when the vehicle door (103) is closed and is deployed into an open position (201) when the vehicle door (103) is open so that the rain protection flap strip (20) forms a rain protection canopy, **characterized in that** the support device (10) is fixed to the vehicle (100) on the vehicle interior side.

2. Motor vehicle (100) of claim 1, **characterized in that**, in the closed position (200), the rain protection flap strip (20) is arranged between the vehicle door (103) and the vehicle interior (110) is arranged.

3. Motor vehicle (100) of one of claims 1 or 2, **characterized in that** the rain protection flap strip (20) is supported on the support device (10) via at least one hinge (21).

4. Motor vehicle (100) of one of the preceding claims, **characterized in that** the rain protection flap strip (20) and/or the support device (10) has a ramp (26) on which the vehicle door (103), when being opened or closed, slides along with a sliding block (126) such that the rain protection flap strip (20) is deployed into the open position (201) when opening the vehicle door (103) and is folded into the closed position (200) when closing the vehicle door (103).

5. Motor vehicle (100) of one of the preceding claims, **characterized in that** the rain protection flap strip (20) is connected with the support device (10) via at least one spring means (22), wherein the rain protection flap strip (20) is biased towards the open position (201) via the spring means (22).

6. Motor vehicle (100) of claim 5, **characterized in that** the spring device (22) is configured as a torsion spring, leg spring or gas spring.

7. Motor vehicle (100) of one of the preceding claims, **characterized in that** the rain protection flap strip (20) is designed as a deep-drawn molded part.

8. Motor vehicle (100) of one of the preceding claims, **characterized in that** the rain protection flap strip (20) has a two-dimensional upper side (25) on which at least one guiding flank and/or one groove (24) is arranged for guiding rainwater.

9. Motor vehicle (100) of one of the preceding claims, **characterized in that** the rain protection flap strip (20) consists of a hydrophobic material and/or has a hydrophobic surface.

10. Motor vehicle (100) of one of the preceding claims, **characterized in that** the support device (10) comprises at least two support elements (11, 12), wherein a first support element (11), at which the rain protection flap strip (20) is supported, extends parallel to a vehicle door frame spar (111) extending substantially in the vehicle longitudinal direction, and a second support element (12) extends parallel to a substantially vertically extending vehicle door frame spar (112).

11. Motor vehicle (100) of one of the preceding claims, **characterized in that** the support device (10) can be fastened on a support system (30) for an insect screen door (31) and/or is integrated in a support system (30) of an insect screen door (31).

12. Motor vehicle (100) of one of the preceding claims, **characterized in that** the support device (10) has at least one guide rail (15) at which an insect screen door (31) is supported.

13. Motor vehicle (100) of one of the preceding claims, **characterized in that** the support device (10) or the rain protection flap strip (20) has a drain channel (40) through which rainwater from the rain cover flap (20) can be discharged.

14. Rain protection device (1) for a door opening (105) of a vehicle (100), the rain protection device (1) comprising a support device (10) on which a rain protection flap strip (20) is movably supported, wherein in the installed state of the rain protection device (1) the flap strip (20) is folded into a closed position (200) when the vehicle door (103) is closed, and is deployed into an open position (201) when the vehicle door (103) is open, so that the rain protection flap strip (20) forms a rain cover canopy, **characterized in that** the support device (10) is configured such that, in the installed state of the rain protection device (1), it is fixed to the vehicle (100) on the vehicle interior side.

## Revendications

1. Véhicule automobile (100) avec dispositif de protection contre la pluie automatique (1) destiné à une ouverture de porte (105) du véhicule (100), le dispositif de protection contre la pluie (1) comprenant un dispositif de support (10) sur lequel une bande de volet à protection contre la pluie (20) est supportée de manière mobile, dans lequel la bande de volet à protection contre la pluie (20) est repliée dans une position fermée (200) lorsque la porte du véhicule (103) est fermée et, lorsque la porte du véhicule (103) est ouverte, la bande est déployée dans une position ouverte (201), de sorte que la bande de volet à protection contre la pluie (20) forme un auvent de protection contre la pluie, **caractérisé en ce que** le dispositif de support (10) est fixé à l'intérieur du véhicule (100).

2. Véhicule automobile (100) selon la revendication 1, **caractérisé en ce que**, dans la position fermée (200), la bande de volet de protection contre la pluie (20) est disposée entre la porte du véhicule (103) et l'intérieur du véhicule (110).

3. Véhicule automobile (100) selon l'une des revendications 1 ou 2, **caractérisé en ce que** la bande de volet de protection contre la pluie (20) est supportée par au moins une charnière (21) sur le dispositif de support (10).

4. Véhicule automobile (100) selon l'une quelconque des revendications précédentes, **caractérisé en ce que** la bande de protection contre la pluie (20) et/ou le dispositif de support (10) présente une rampe (26) sur laquelle la porte du véhicule (103) glisse à l'aide d'un patin (126) lorsque la porte est ouverte ou fermée, de sorte que la bande de volet de protection contre la pluie (20) soit déployée lorsque la porte du véhicule (103) est ouverte (201) et qu'elle est repliée dans la position fermée (200) lorsque la porte du véhicule est fermée.

5. Véhicule automobile (100) selon l'une quelconque des revendications précédentes, **caractérisé en ce que** la bande de protection contre la pluie (20) est reliée par au moins un moyen formant ressort (22) au dispositif de support (10), la bande de protection contre la pluie (20) étant sollicité par le moyen de ressort (22) vers la position ouverte (201).

6. Véhicule automobile (100) selon la revendication 5, **caractérisé en ce que** le moyen de ressort (22) est conçu sous la forme d'un ressort de torsion, d'un ressort de jambe ou d'un ressort à gaz.

7. Véhicule automobile (100) selon l'une quelconque des revendications précédentes, **caractérisé en ce que** la bande de protection contre la pluie (20) est conçue comme une pièce moulée emboutie.

8. Véhicule automobile (100) selon l'une quelconque des revendications précédentes, **caractérisé en ce que** la bande de protection contre la pluie (20) comprend une face supérieure plate (25) sur laquelle au moins un flanc de guidage et/ou une rainure (24) est disposé pour guider l'eau de pluie.

9. Véhicule automobile (100) selon l'une quelconque des revendications précédentes, **caractérisé en ce que** la bande de protection contre la pluie (20) est fabriquée d'un matériau hydrophobe et/ou présente une surface hydrophobe.

10. Véhicule automobile (100) selon l'une quelconque des revendications précédentes, **caractérisé en ce que** le dispositif de support (10) comporte au moins deux éléments de support (11, 12), un premier élément de support (11), sur lequel est supporté la bande de protection contre la pluie (20), s'étendant parallèlement à un longeron de cadre de porte de véhicule (111) s'étendant sensiblement dans la direction longitudinale du véhicule, et un deuxième élément de support (12) s'étendant parallèlement à un longeron de cadre de porte de véhicule s'étendant sensiblement verticalement (112).

11. Véhicule automobile (100) selon l'une quelconque des revendications précédentes, **caractérisé en ce que** le dispositif de support (10) peut être fixé sur un système de support (30) pour une porte moustiquaire (31) et/ou est intégré dans un système de support (30) d'une porte moustiquaire (31).

12. Véhicule automobile (100) selon l'une quelconque des revendications précédentes, **caractérisé en ce que** le dispositif de support (10) comprend au moins un rail de guidage (15) dans lequel est supportée une porte moustiquaire (31).

13. Véhicule automobile (100) selon l'une quelconque des revendications précédentes, **caractérisé en ce que** le dispositif de support (10) ou la bande de protection contre la pluie (20) comprend un canal de drainage (40) à travers lequel l'eau de pluie peut être drainée de la bande de protection contre lapluie (20).

14. Dispositif de protection contre la pluie (1) destiné à une ouverture de porte (105) d'un véhicule (100), le dispositif de protection contre la pluie (1) comportant un dispositif de support (10) sur lequel une bande de volet à protection contre la pluie (20) est supportée de manière mobile, dans lequel, en état installé du dispositif de protection contre la pluie (1), la bande de protection contre la pluie (20) est repliée dans une position fermée (200) lorsque la porte du véhicule (103) est fermée, et est déployée dans une position ouverte (201) lorsque la porte du véhicule (103) est ouverte, de sorte que la bande de protection contre la pluie (20) forme un auvent anti-pluie, **caractérisé en ce que** le dispositif de support (10) est réalisé de sorte qu'en état installé du dispositif de protection contre la pluie (1), elle soit fixée au véhicule (100) sur le côté intérieur du véhicule.
